Europäisches Patentamt

European Patent Office

Office européen des brevets

(11) Veröffentlichungsnummer: **0 191 130**
A1

# EUROPÄISCHE PATENTANMELDUNG

(21) Anmeldenummer: 85108105.9

(22) Anmeldetag: 29.06.85

(51) Int. Cl.⁴: **B 29 D 7/01,** B 29 C 47/14,
B 29 C 47/86
// B29L7:00

(30) Priorität: 14.02.85 DE 3504997

(71) Anmelder: **DYNAMIT NOBEL AKTIENGESELLSCHAFT,
Postfach 1261, D-5210 Troisdorf, Bez. Köln (DE)**

(43) Veröffentlichungstag der Anmeldung: **20.08.86
Patentblatt 86/34**

(84) Benannte Vertragsstaaten: **AT BE CH DE FR GB IT LI LU
NL SE**

(72) Erfinder: **Jensch, Wolfgang, Dr., Rubensstrasse 3,
D-5210 Troisdorf (DE)**

(54) **Verfahren zur Beseitigung der Oberflächenklebrigkeit weichmacherhaltiger Polyvinylbutyralfolien nach der
Extrusionsmethode.**

(57) Das Verfahren betrifft eine Methode zur Beseitigung
der Oberflächenklebrigkeit weichmacherhaltiger Polyvinylbutyralfolien, bei der der Austritt der Folie aus der Extrusionsdüse nicht, wie nach den bisherigen Verfahren, an der
Luft, sondern unter Wasser erfolgt.

Diese Maßnahme bewirkt, daß die Folie nicht glatt und
klebrig, sondern mit einer technisch geeigneten Oberflächenprägung aus der Extrusionsdüse austritt, so daß eine
Nachbehandlung, z.B. mittels Prägekalander, sich erübrigt.

In Kombination mit dem Folienaustritt unter Wasser
kann zusätzlich vorgesehen werden, die Extrusionsdüse,
vorzugsweise im Austrittsbereich der Folie, durch ein inneres Kühlsystem zu kühlen, um ein Überhitzen des Wasserbades zu vermeiden.

0191130

Troisdorf, den 25. Juni 1985
OZ 85046            Sc/Bd

DYNAMIT NOBEL AKTIENGESELLSCHAFT
Troisdorf Bez. Köln

Verfahren zur Beseitigung der Oberflächenklebrigkeit weichmacherhaltiger Polyvinylbutyralfolien nach der Extrusionsmethode

Die Erfindung betrifft ein Verfahren der im Oberbegriff des
Anspruchs 1 angegebenen Art.

Weichmacherhaltige Folien aus Polyvinylbutyral (PVB) dienen zur
Herstellung von Sicherheitsverbundgläsern. Sie sind bereits bei
Raumtemperatur ungewöhnlich weich und klebrig. Die hohe Klebrigkeit ist zwar unerläßlich für den Zusammenhalt des Verbundes
Glas-Folie-Glas in Sicherheitsverbundgläsern, für den Verarbeitungsprozeß zu diesen Gläsern muß die Klebrigkeit jedoch
vorübergehend beseitigt werden. Die glatten und klebrigen Oberflächen von PVB-Folien, die nach den bekannten Extrusionsverfahren im allgemeinen entstehen, schließen eine direkte Verwendung der Folien zur Verbundglaserzeugung aus.

Es sind verschiedene großtechnische Verfahren bekannt, die
Oberflächenklebrigkeit durch Aufrauhen bzw. durch Bilden von
gleichmäßig verteilten Vertiefungen in der Oberfläche temporär
zu eliminieren. Gemäß der DE-PS 17 79 235 wird dazu ein

0191130

- 2 -

Extrusionswerkzeug mit gezahnten Düsenlippen verwendet, wodurch zwar Folien entstehen, deren Klebrigkeit durch Längsriefung vermindert ist, solche längsgerieften Folien haben jedoch den Nachteil, daß der Luftaustritt aus den Verbundglasscheiben dann nicht immer einwandfrei erfolgt, wenn eine geriefte Folie mit ihrer Riefenrichtung quer zur Laufrichtung der Scheiben auf der sogenannten "Vorverbundstraße" verlegt wurde, was bei einer rationellen Ausnutzung der vorhandenen Folienbreiten nicht immer zu umgehen ist.

Das bisher überwiegend angewandte Verfahren zur Beseitigung der Oberflächenklebrigkeit von PVB-Folien besteht im Prägen der Folienoberflächen mittels Kalander nach dem Austritt der Rohfolie aus der Extrusionsdüse. Hierbei bereitet die Klebrigkeit der Rohfolie enorme Schwierigkeiten, sofern das Prägen an der Luft vorgenommen wird.

Um diese Schwierigkeiten zu umgehen, wird nach einem in der DE-P.S 1919 627 beschriebenen Verfahren der Prägeprozeß der vorgefertigten Rohfolie in heißem Wasser oberhalb 95°C durchgeführt. Beim Durchgang der Folie durch den unter Wasser befindlichen Spalt zwischen den beiden Prägewalzen verhindert dann der Wasserfilm an den Folienoberflächen ein Ankleben der Rohfolie an den Prägewalzen, was den Prägeprozeß leichter durchführbar macht. Ein Nachteil auch dieser Verfahrensweise besteht jedoch darin, daß diese Nachbehandlung der Folie unter entsprechend hohem technischen Aufwand erforderlich ist.

Hiervon ausgehend liegt der Erfindung die Aufgabe zugrunde, ein Verfahren anzugeben, das die beschriebenen Nachteile nicht aufweist bzw. mit dem sich eine Fertigfolie erzielen läßt, die bereits beim Austritt aus der Extrusionsdüse eine technisch geeignete Oberflächenprägung mit Rauhtiefen zwischen 10 $\mu$ und 40 $\mu$ besitzt und die ohne Schwierigkeiten eine direkte Weiterverarbeitung der Folie zu Verbundglas erlaubt.

- 3 -

Diese Aufgabe wird entsprechend dem Kennzeichen des Anspruchs 1 durch ein Verfahren gelöst, bei dem eine technisch geeignete Oberflächenprägung bereits beim Austritt der Folie aus der Extrusionsdüse dann entsteht, wenn der Austritt unter Wasser erfolgt.

Das neue Verfahren hat zusätzlich eine Anzahl wesentlicher Vorteile, die im folgendem geschildert werden:

Von großer Bedeutung für die Herstellung von Verbundglasfolien ist der Umstand, daß beim Austritt der Folie unter Wasser, im Gegensatz zu dem Folienaustritt an der Luft, die Stirn- und Innenflächen des Düsenspaltes sich stets in absolut sauberem Zustand befinden. Ein Anbacken von klebriger Folienmasse ist dann nicht mehr möglich. Da Luft nicht hinzutreten kann, erfolgt auch kein "Verbrennen" von Folienmasse durch thermische Zersetzung, wozu unter den Bedingungen der Folienproduktion Sauerstoff erforderlich ist. Das "Verbrennen" beim Extrudieren unter Luftzutritt äußert sich in einer Schwarzbraunverfärbung und Verhärtung der an den Lippen angebackenen Masse. Dadurch kann die exakt eingestellte Geometrie des Düsenspaltes verschlechtert werden.

Nun ist ein besonders wichtiges Qualitätsmerkmal einer Sicherheitsverbundglasfolie deren auf hundertstel Millimeter genaue Dickenverteilung. Sprunghafte Dickenungenauigkeiten der Folie, die durch Verschlechterung der Spaltgeometrie infolge angebackener Masse entstehen können, machen optische Verzerrungen in der Durchsicht der Verbundglasscheiben möglich, was unzulässig ist.
Bei dem erfindungsgemäßen Verfahren des Folienaustritts unter Wasser wird dieser Nachteil der bekannten Verfahren beseitigt.

- 4 -

Bei Produktionsunterbrechungen,die zwecks Beseitigung der an den Düsenlippen angebackenen Masse ("Düsenreinigen") bei der Produktion nach den bekannten Verfahren erforderlich sind, schrumpft die im Extrusionswerkzeug befindliche Folienmasse durch Abkühlung. Infolgedessen zieht sich die Folienmasse aus der engen Düsenmündung zurück. Es verbleiben aber klebrige Massereste auch an den Innenflächen der heißen Düsenlippen, die nun dem Luftsauerstoff ausgesetzt sind, so daß die Gefahr der thermischen Zersetzung besteht. Die dadurch verhärteten Massereste an den Lippeninnenflächen können in der Folie Riefen erzeugen, die oft erst nach der Vorverbundherstellung in der Scheibe sichtbar werden. Diese Ursache der Riefenbildung wird erfindungsgemäß ausgeschaltet.

Ein weiterer Vorteil des erfindungsgemäßen Verfahrens ist die Ausschaltung der Umweltbelastung durch Weichmacherdämpfe. Über der Extrusionsdüse ist eine Abzughaube für Weichmacherdämpfe nicht mehr erforderlich. Ebenso entfällt die Notwendigkeit eines Weichmacherabscheiders zur Abluftreinigung. Durch Kondensation von Weichmacher an Aggregaten der Herstellanlage und Tropfen auf die Folie bedingte Flecken auf dieser treten nicht mehr auf.

Durch Verdampfen von Weichmacher beim Austritt der Folie aus der Extrusionsdüse geht bei der Produktion nach den bekannten Verfahren Weichmacher verloren. Auch diese Verluste werden bei Anwendung der Unterwasserextrusionsmethode vermieden.

Bei Würdigung der Vorteile, die mit dem erfindungsgemäßen Verfahren verbunden sind, läßt sich feststellen, daß ein wesentlicher Fortschritt in der Herstellung von Sicherheitsverbundglasfolie gegeben ist:

Die PVB-Folie tritt unter optimalen Bedingungen aus einer Extrusionsdüse aus, die sich zu jedem Zeitpunkt während der Produktion in absolut sauberem Zustand befindet und somit

- 5 -

einen unverfälschten Spaltquerschnitt aufweist. Dadurch wird die Dickengenauigkeit und Fehlerlosigkeit der Folie verbessert. Riefen in der Folie werden weitgehend vermieden. Das Unterbrechen der Folienproduktion zwecks "Düsenreinigen" ist nicht mehr erforderlich. Dadurch bedingte Totzeiten und Stoffverluste entfallen. Die Folie besitzt bereits beim Austritt aus der Düse eine technisch geeignete Oberflächenprägung. Die Umweltbelastung durch Weichmacherdämpfe wird beseitigt.

Die nach dem erfindungsgemäßen Verfahren erhaltenen Sicherheitsverbundglasfolien sind solche auf der Basis von weichgemachtem Polyvinylbutyral. Sie haben im allgemeinen einen Weichmachergehalt von 25 % bis 40 %. Als Weichmacher werden in der Regel Triethylenglykol-Ester aliphatischer $C_6$- bis $C_8$-Monocarbonsäuren eingesetzt, wie z.B. Triethylenglykol-di-2-ethylbutyrat (Flexol 3GH) oder Triethylenglykol-diheptoat. Das verwendete Polyvinylbutyral besitzt einen Restgehalt an Polyvinylalkohol von 17 % bis 25 %.

Bei der praktischen Durchführung des erfindungsgemäßen Verfahrens kann es möglich sein, daß die durch die Extrusion zugeführte Wärme das Wasserbad im Bereich der Düsenmündung zum Sieden bringt, was negative Auswirkungen auf die Qualität der Folie haben kann. Um dem vorzubeugen, muß das heiße Wasser im Bereich der Düsenmündung genügend schnell ausgetauscht werden bzw. die PVB-Folie mit möglichst geringer Massetemperatur aus der Düse austreten. Für letzteres ist in zweckmäßiger Ausgestaltung der Erfindung vorgesehen, daß entsprechend Anspruch 2 in Kombination mit dem Folienaustritt unter Wasser die Extrusionsdüse, vorzugsweise im Austrittsbereich der Folie, durch ein inneres Kühlsystem gekühlt wird, um ein Überhitzen des Wasserbades zu vermeiden.

Die hierdurch angestrebte Temperaturabsenkung hat bei dem zumeist benutzten "Kleiderbügelwerkzeug" dort zu erfolgen, wo die Folienmasse den Fließkanal bereits passiert und sich über den

- 6 -

"Damm" über die gesamte Werkzeugbreite verteilt hat, weil nur ab diesem Bereich eine über die Werkzeugbreite gleichmäßig verteilte Kühlwirkung möglich ist.

Die negativen Auswirkungen auf die Folienqualität durch eine Überhitzung des Wasserbades sind folgende:

Beim Sieden des Wassers können im Austrittsbereich der Folie Turbulenzen entstehen. Die dadurch bewirkte Schlingerbewegung der Folie kann zu Verzerrungen der Folie führen. Dampfblasen können sich auf der heißen Folie festsetzen und Fehlstellen in der Folienoberfläche verursachen, was zu Lufteinschlüssen in den Verbundglasscheiben führen kann, die mit den PVB-Folien gefertigt werden. Die durch das Sieden bewegte Wasseroberfläche kann zu einer ungleichmäßigen Benetzung der vorgezogenen Düsenlippen führen, was Dickenschwankungen der Folie zur Folge haben kann.

Das erfindungsgemäße Verfahren wird anhand zweier Beispiele nachstehend noch näher erläutert:

Beispiel 1

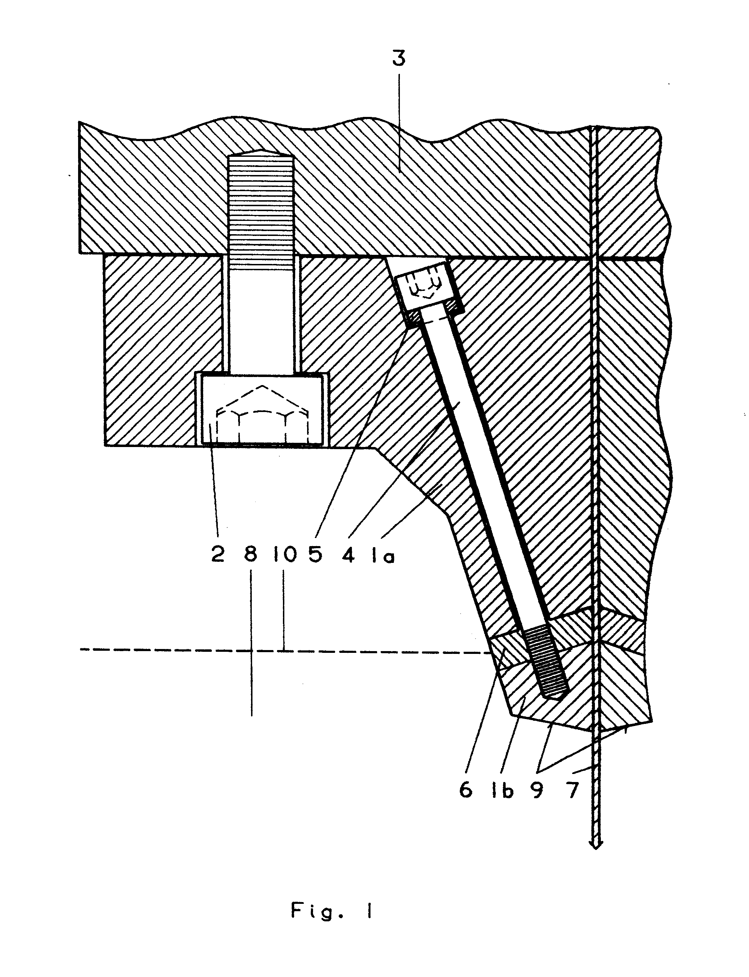

Eine Durchführungsform des neuen Verfahrens gemäß Anspruch 1 wird anhand der Figur 1 erläutert. Die Figur 1 zeigt einen Querschnitt durch die eine Hälfte des im Austrittsbereich der Folie symmetrischen Extrusionswerkzeuges, und zwar senkrecht zur Folienebene. Wie ersichtlich, sind die ins Wasserbad 8 eintauchenden Düsenlippen vorgezogen. Die vorgezogenen Lippen sind mittels Edelstahlschrauben 2 an dem Werkzeugklotz 3 befestigt. Sie bestehen aus den beiden Lippenteilstücken 1a und 1b. Die Teilstücke sind durch die Edelstahlschrauben 4 miteinander verbunden. Die Schrauben ihrerseits sind mit Wärmeisolationsscheiben 5 unterlegt. Die Verbindungsschrauben 4 sind im Abstand von 50 mm über die Lippenlänge verteilt, in der Figur also senkrecht zur Zeichenebene. Die Kanäle für die Schrauben sind weit genug, um einen metallischen Kontakt zwischen den Schrauben und dem Lippenteil 1a zu vermeiden. Zwischen den beiden Lippenteilen befindet sich eine Wärmeisolierplatte 6, um den Wärmeübergang von 1a nach 1b möglichst gering zu halten. Die PVB-Folie 7 läuft senkrecht ins Wasserbad 8 ein. Es herrschen dann an beiden Folienseiten identische Bedingungen. Die Stirnflächen 9 der Düsenlippen sind nach oben abgeschrägt, damit ggf. Dampfblasen leichter aufsteigen können. Das Wasserbad wird im Durchlauf über Zulaufrohre beschickt, deren Austrittsöffnungen in engem Abstand über die Lippenlänge gleichmäßig verteilt sind, um Temperaturunterschiede über die Lippenlänge auszuschließen. Das Wasser im Bereich der Lippenmündung muß schnell genug ausgetauscht werden, um ein Sieden des Wassers zu vermeiden, was negative Folgen in Bezug auf die Folienqualität haben würde. Eine vorteilhafte Wassertemperatur beträgt 60°C bis 80°C. Zur Optimierung der Wärme abfuhr kann der Wasserspiegel 10 mittels eines verstellbaren Überlaufes angehoben oder gesenkt werden.

Die aus der Extrusionsdüse unter diesen Bedingungen austretende Polyvinylbutyralfolie besitzt eine technisch geeignete Oberflächenprägung der Rauhtiefe zwischen 10 µ und 40 µ, wodurch eine direkte Weiterverarbeitung der Folie zu Sicherheitsverbundglas ohne Nachbehandlung ermöglicht wird.


<u>Beispiel 2</u>

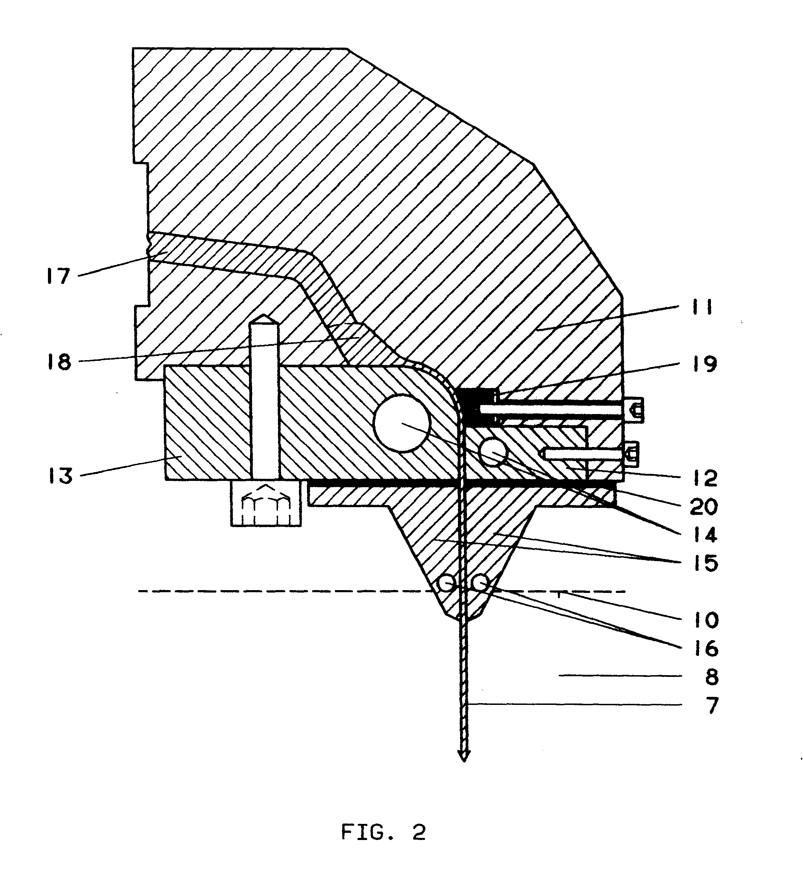

In der Durchführungsform des Verfahrens gemäß Anspruch 2 wird die angestrebte Temperaturabsenkung der Folienmasse dadurch erreicht, daß, in Kombination mit dem Folienaustritt unter Wasser, die Extrusionsdüse, vorzugsweise im Austrittsbereich der Folie, durch ein inneres Kühlsystem gekühlt wird. Dies ist in Figur 2 dargestellt. Während der Werkzeugklotz 11 durch ein Heizsystem auf eine Temperatur von etwa 180°C gehalten wird, werden die beiden "inneren Werkzeuglippen" 12 und 13 nicht, wie normalerweise üblich, ebenfalls beheizt, sondern mittels Kühlkanäle 14 gekühlt, die senkrecht zur Zeichenebene angeordnet sind. Als Kühlmedien werden Öl im Umlauf, heißes Druckwasser oder Niederdruckdampf von etwa 5 atü verwendet. Die Kühltemperatur

- 8 -

ist abhängig von der Dimensionierung des Extrusionswerkzeuges. Sie liegt vorzugsweise zwischen 130$^0$C und 160$^0$C. Zusätzlich oder allein werden die "vorderen Düsenlippen" 15 über Kühlkanäle 16 gekühlt, die gleichfalls senkrecht zur Zeichenebene angeordnet sind. Die Temperatur des Kühlmediums ist in diesem Falle abhängig von der Lippenlänge und von der Eintauchtiefe der Lippen in das Wasserbad. Sie liegt vorzugsweise zwischen 120$^0$C und 150$^0$C.

In der Figur 2 ist ein sogenanntes "Kleiderbügelwerkzeug" im Schnitt senkrecht zur Folienebene dargestellt. Die Folienmasse tritt über den "Kanal" 17 in den "Werkzeugklotz" 11 ein. Im Bereich des "Dammes" 18 verteilt sich der Massestrang über die Werkzeugbreite. Die Dickengenauigkeit der Folie über die Werkzeugbreite wird mittels des "Staubalkens" 19 eingestellt. Die PVB-Folie 7 tritt wieder senkrecht zur Zeichenebene aus. Zwischen den inneren Werkzeuglippen 12, 13 und den vorderen Düsenlippen 15 ist die Wärmeisolierplatte 20 angeordnet. Das Wasserbad und dessen Oberfläche sind wie in Figur 1 wieder mit den Bezugszeichen 8 und 10 gekennzeichnet.

0191130

Troisdorf, den 25. Juni 1985
OZ 85046        Sc/Bd

Patentansprüche

1. Verfahren zur Beseitigung der Oberflächenklebrigkeit weichmacherhaltiger Polyvinylbutyralfolien nach der Extrusionsmethode, d a d u r c h  g e k e n n z e i c h n e t , daß der Austritt der Folie aus der Extrusionsdüse unter Wasser erfolgt.

2. Verfahren nach Anspruch 1, dadurch gekennzeichnet, daß in Kombination mit dem Folienaustritt unter Wasser, die Extrusionsdüse, vorzugsweise im Austrittsbereich der Folie, durch ein inneres Kühlsystem gekühlt wird.

Fig. 1

DYNAMIT NOBEL AKTIENGESELLSCHAFT, TROISDORF

0191130

FIG. 2

DYNAMIT NOBEL AKTIENGESELLSCHAFT.TROISDORF

| | **EINSCHLÄGIGE DOKUMENTE** | | EP 85108105.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A - 2 004 500 (BECK) <br> * Gesamt * | 1 | B 29 D 7/01 <br> B 29 C 47/14 <br> B 29 C 47/86 // <br> B 29 K <br> B 29 L 7:00 |
| A | | 2 | |
| X | GB - A - 986 160 (BRITISH CELLO-PHANE) <br> * Seite 1, Zeilen 21-55; Fig. 6* | 1 | |
| Y | | 2 | |
| Y | US - A - 3 870 454 (PENROD) <br> * Gesamt * | 2 | |
| Y | AT - B - 288 683 (ÖSTERREICHISCHE STICKSTOFFWERKE) <br> * Gesamt * | 2 | |
| A | AT - B - 292 293 (ÖSTERREICHISCHE STICKSTOFFWERKE) <br> * Gesamt * | 2 | RECHERCHIERTE SACHGEBIETE (Int. Cl.4) <br><br> B 29 C <br> B 29 D |
| A | DE - B - 1 404 473 (DU PONT) <br> * Gesamt * | | |

Der vorliegende Recherchenbericht wurde für alle Patentansprüche erstellt.

| Recherchenort | Abschlußdatum der Recherche | Prüfer |
|---|---|---|
| WIEN | 14-03-1986 | MAYER |